# EUROPÄISCHE PATENTSCHRIFT

(11) **EP 3 403 480 B1**
(45) Veröffentlichungstag und Bekanntmachung des Hinweises auf die Patenterteilung: **13.05.2020**
(21) Anmeldenummer: 18173250.4
(22) Anmeldetag: 18.05.2018
(51) Int. Cl.: A01B 73/02

(54) **LANDWIRTSCHAFTLICHES ANBAUGERÄT**
AGRICULTURAL IMPLEMENT
APPAREIL AGRICOLE RAPPORTÉ

(30) Priorität: 18.05.2017 DE 202017103000 U
(43) Veröffentlichungstag der Anmeldung: 21.11.2018
(73) Patentinhaber: PÖTTINGER Landtechnik GmbH, 4710 Grieskirchen (AT)
(72) Erfinder: Kaltseis, Martin, 4733 Heiligenberg (AT); Ehrentraut, Michael, 4720 Neumarkt im Hausruckkreis (AT); Baldinger, Friedrich, 4600 Wels (AT)
(74) Vertreter: Thoma, Michael

(56) Entgegenhaltungen:
- EP-A1- 1 493 322
- EP-A2- 2 923 550
- DE-A1-102010 001 039
- KR-B1- 100 859 505
- US-A1- 2014 379 230
- US-B1- 7 712 544

## Beschreibung

Die vorliegende Erfindung betrifft ein landwirtschaftliches Anbaugerät zum Anbau an einen Schlepper, mit einem zumindest ein Arbeitsaggregat tragenden Maschinenrahmen, der zumindest einen Klapprahmenteil aufweist, der mittels eines Klappantriebs aus einer Arbeitsstellung in eine Transportstellung klappbar ist, wobei eine Verriegelung zum Verriegeln des Klapprahmenteils in der genannten Transportstellung vorgesehen ist.

Solche Anbaugeräte sind beispielsweise aus den Schriften DE 10 2010 001 039 A1, US 2014/0379230 A1 oder EP 29 23 550 A2 bekannt. Ähnliche Gerätschaften sind auch aus den Schriften US 7712544 B1, EP 14 93 322 A1 oder KR 100 859 505 B1 bekannt.

Um bei landwirtschaftlichen Anbaugeräten eine große Arbeitsbreite realisieren, andererseits aber auch die zulässige Straßenfahrbreite einhalten zu können, wird der Maschinenrahmen, der die Arbeitsaggregate trägt, oftmals klappbar ausgebildet. Im Arbeitsbetrieb stehen die Anbaugeräte seitlich über die Spur des Schleppers über und können Arbeitsbreiten von etlichen Metern einnehmen, sodass der Maschinenrahmen klappbar ausgebildet wird, um die im Arbeitsbetrieb seitlich überstehenden Rahmenteile in eine weiter innen, d.h. innerhalb oder näher bei der Schlepperspur befindliche Transportstellung verbringen zu können. Solche Klapprahmenteile können selbst Arbeitsaggregate tragen, ggfs. aber auch nur Hilfskomponenten wie Schutzrahmen oder Schwadtücher tragen.

Solche Klapprahmenteile nehmen dabei häufig in der Arbeitsstellung eine liegende, sich quer zur Fahrtrichtung erstreckende Ausrichtung ein und können um zumindest eine Klappachse in eine weiter innenliegende Transportstellung verschwenkt bzw. geklappt werden, wobei die entsprechende Klappachse beispielsweise liegend in Fahrtrichtung ausgerichtet sein kann, um den Klapprahmenteil in eine näherungsweise aufrechte Transportstellung nach oben schwenken zu können. Alternativ kann auch eine aufrechte Klappachse vorgesehen sein, um den entsprechenden Klapprahmenteil bspw. nach hinten hinter einen Hauptrahmenteil verschwenken und somit die Spurbreite verringern zu können. Ferner ist es auch bekannt, solche seitlichen Klapprahmenteile mehrachsig zwischen einer Arbeitsstellung und der Transportstellung zu verschwenken. Beispielsweise können solche Klapprahmenteile zunächst um eine liegende, quer zur Fahrtrichtung ausgerichtete erste Klappachse aus der liegenden Transportstellung aufgerichtet bzw. aufgeklappt werden. In dieser aufgerichteten, an sich immer noch seitlich auskragenden Stellung kann der Klapprahmenteil dann um eine zweite Klappachse, die sich in der aufgerichteten Stellung näherungsweise aufrecht erstreckt und in der noch nicht aufgerichteten Arbeitsstellung liegend in Fahrtrichtung erstrecken kann, um den seitlich auskragenden Klapprahmenteil nach vorne oder nach hinten in eine näherungsweise fahrtrichtungsparallele Ausrichtung abgeklappt werden, um in dieser Transportstellung die zulässige Straßenfahrbreite einzuhalten.

Unabhängig von der konkreten Anordnung und Anzahl der Klappachsen ist es sinnvoll und in etlichen Ländern auch vorgeschrieben, den Klapprahmenteil in seiner Transportstellung mittels einer Verriegelung zu sichern, um zu verhindern, dass sich der Klapprahmenteil unbeabsichtigt oder durch Fehlbedienung aus der Transportstellung löst und beispielsweise seitlich nach außen schwenkt. Solche Transportstellungs-Verriegelungen können dabei einen mechanischen Riegel oder eine Klinke umfassen, mittels derer der Klapprahmenteil in der Transportstellung blockiert bzw. fixiert wird, wobei die genannte Verriegelung den Klapprahmenteil in der Transportstellung am Hauptrahmen oder einem anderen Anbauteil formschlüssig fixieren kann. Beispielsweise ist es bekannt, den Klapprahmenteil mittels eines Steckbolzens in der Transportstellung zu verriegeln, der gezogen werden muss, bevor der Klapprahmen wieder in die Arbeitsstellung verbracht werden kann.

Solche Verriegelungen zum Sichern des Klapprahmenteils in der Transportstellung sind zwar aus Sicherheitsgründen sinnvoll, können allerdings die Handhabung des Anbaugeräts beeinträchtigen. Werden beispielsweise die vorgenannten Steckbolzen verwendet, ist es in der Regel notwendig, dass der Schlepperführer vom Schlepper absteigt und den Bolzen vor einem Klappvorgang entfernt bzw. nach dem Verbringen in die Transportstellung einsetzt. Um ein solches Absteigen zu vermeiden, wurde diesbezüglich bereits angedacht, eine Betätigungsleine anzubringen, die vom Steckbolzen in die Fahrkabine geführt ist, um den Bolzen von der Fahrerkabine aus ziehen und sodann den Klapprahmenteil ausklappen zu können. Bisweilen ist eine solche Schnurbetätigung jedoch mühsam, insbesondere wenn die Verriegelung klemmt. Zudem kann entlang der Betätigungsschnur Schmutz in die Führerkabine gelangen bzw. kann bisweilen gar keine Betätigungsschnur in die Maschinenführerkabine gelegt werden, wenn die Kabine zum Anbaugerät hin geschlossen ausgebildet ist, was beispielsweise bei Frontanbaugeräten regelmäßig der Fall ist, aber auch bei Heckanbau vorkommen kann, wenn die Kabine heckseitig geschlossen ist.

Es wurde insofern auch bereits angedacht, den Klappantrieb so auszubilden, dass dieser im deaktivierten Zustand den Klapprahmenteil in der Transportstellung halten kann, beispielsweise durch einen entsprechend große Selbsthemmung des Klappantriebs oder einem Absperren der Druckmittelkanäle bei einer hydraulischen Ausbildung des Klappantriebs. Allerdings birgt eine solche Lösung, bei der der Klapprahmenteil allein vom Klappantrieb in der Transportstellung gehalten wird, die Gefahr, dass ein Ausklappen durch eine unbeabsichtigte Betätigung des Klappantriebs erfolgt, beispielsweise durch bloßes Berühren des Stellhebels bzw. -knopfs für den Klappantrieb.

Der vorliegenden Erfindung liegt hiervon ausgehend die Aufgabe zugrunde, ein verbessertes landwirtschaftliches Anbaugerät der vorgenannten Gattung zu schaffen, das Nachteile des Standes der Technik vermeidet und Letzteren in vorteilhafter Weise weiterbildet. Insbesondere soll eine einfach und komfortabel vom Maschinenführerstand aus bedienbare Verriegelung geschaffen werden, die gleichwohl ein unbeabsichtigtes Ausklappen des Klapprahmenteils sicher verhindert und dennoch keine aufwendigen Maßnahmen am Anbaugerät erfordert. Vorzugsweise soll die Verriegelung auch an älteren Anbaugeräten nachrüstbar sein, ohne hierfür zusätzliche Energieanschlüsse zu benötigen.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, eine motorische bzw. durch Fremdenergie unterstützte Betätigung der Verriegelung vorzusehen und für deren In-Gang-Setzen ein separates Betätigungssignal zu verlangen, das unabhängig vom Betätigungssignal für den Klappantrieb zu geben ist, um ein unbeabsichtigtes Ausklappen nur durch Berühren des Klappantrieb-Stellhebels bzw. - knopfs zu vermeiden. Erfindungsgemäß ist ein Entriegelungsaktor zum fremdenergiebetätigten Entriegeln der Transportstellungs-Verriegelung vorgesehen, wobei der Entriegelungsaktor und der Klappantrieb mittels separater Steuergeräte jeweils manuell betätigbar sind. Um den Klapprahmenteil ausklappen zu können, müssen also die beiden genannten, separaten Steuergeräte manuell betätigt werden, sodass eine Zweihandbedienung für das Ausklappen erforderlich ist bzw. die Steuergeräte für den Entriegelungsaktor und den Klappantrieb kurz hintereinander betätigt werden müssen, um zunächst die Verriegelung zu lösen und dann den Maschinenrahmenteil ausklappen zu können.

Der genannte Entriegelungsaktor kann dabei grundsätzlich verschieden ausgebildet sein. Beispielsweise wäre es denkbar, sowohl die Verriegelungs-, als auch die Entriegelungsbewegung durch den genannten Stellaktor zu bewerkstelligen und hierfür den Stellaktor doppelt wirkend auszubilden, sodass zueinander gegenläufige Stellbewegungen zum Verriegeln und Entriegeln erzeugt werden können. In vorteilhafter Weiterbildung der Erfindung kann aber auch vorgesehen sein, dass die Verriegelungs- und Entriegelungsbewegung in unterschiedlicher Weise bzw. durch unterschiedliche Stellmittel bewerkstelligt werden.

Insbesondere kann die Verriegelung von einer Vorspanneinrichtung in die verriegelnde Stellung vorgespannt sein und der Entriegelungsaktor dazu konfiguriert sein, die Entriegelung entgegen der Vorspanneinrichtung zu bewirken und andererseits ein Verriegeln durch die Vorspanneinrichtung zuzulassen, je nachdem, in welchem Betriebszustand sich der Entriegelungsaktor befindet.

Gemäß der Erfindung weist der genannte Entriegelungsaktor zumindest einen Druckmittelzylinder auf, mittels dessen die Verriegelung gelöst werden kann. Ist in der vorgenannten Weise eine Vorspanneinrichtung zum Verbringen der Verriegelung in die verriegelnde Stellung vorgesehen, kann der genannte Druckmittelzylinder einfach wirkend ausgebildet sein, um lediglich die entriegelnde Bewegung zu erzeugen.

Alternativ kann der genannte Druckmittelzylinder jedoch auch doppelt wirkend ausgebildet sein und gegenläufige Bewegungen erzeugende Druckmittelkammern aufweisen.

Der Druckmittelzylinder ist dabei ein Gleich- bzw. Gleichgangzylinder, der in entgegengesetzten Laufrichtungen zumindest näherungsweise dieselbe Volumenverdrängung besitzt. Hierzu ist der Druckmittelzylinder mit einer durchgängigen Kolbenstange versehen, die sich auf beiden Seiten des Kolbens erstreckt und die auf gegenüberliegenden Kolbenseiten liegenden Druckkammern durchsetzt, sodass zwei Ringkammern mit denselben Querschnittsflächen vorgesehen sind. Durch einen solchen Gleichlaufzylinder kann ohne aufwendige Hydraulikschaltungen in einfacher Weise eine freigängige Schwimmstellung erzielt werden, ohne das bei Stellbewegungen aus der entsprechenden Druckkammer austretende Druckfluid in spezieller Weise in einen Tank rückführen zu müssen. Insbesondere in Verbindung mit einer Vorspanneinrichtung kann eine solche Schwimmstellung vorteilhaft sein, um ein selbsstätiges Verriegeln zu ermöglichen, bei dem beispielsweise der in die Verriegelung einfahrende Klapprahmenteil den vorgespannten Riegel zunächst aufdrückt und dieser sodann wieder zuschnappt, was mit entsprechenden Druckmittelzylinderbewegungen einhergehen kann, die durch die genannte Schwimmstellung ermöglicht werden. Ebenfalls ist sichergestellt, dass beim Nicht-Betätigen des Steuergeräts des Entriegelungsaktors die Verriegelung wieder selbsstätig in die verriegelnde Stellung zurückgeht.

Insbesondere kann die Druckkammer des Druckmittelzylinders, die für die Stellbewegung in die verriegelnde Stellung zuständig ist, einen Ablauf aufweisen, dessen Ablaufquerschnitt durch Strömungssteuermittel gesteuert bzw. beeinflusst ist, wobei die genannten Strömungssteuermittel dazu konfiguriert sind, in der Schwimmstellung des Druckmittelzylinders Druckfluid aus der genannten Druckkammer ablaufen zu lassen und bei Beaufschlagung der genannten Druckkammer mit Druckfluid von einer Druckfluidquelle her einen Druckaufbau zum Verstellen des Druckmittelzylinders zum Entriegeln der Verriegelung zu ermöglichen.

Die genannten Strömungssteuermittel im Ablauf der Entriegelungsdruckkammer sind also derart konfiguriert, dass bei ausbleibender Druckfluidbeaufschlagung von der Druckquelle her das Druckfluid aus der Druckkammer ablaufen und die Verriegelung in die verriegelnde Stellung fahren kann, insbesondere unter Beaufschlagung der Vorspanneinrichtung, und andererseits aber in der Entriegelungskammer soviel Druck aufgebaut werden kann, dass der Druckmittelzylinder die Verriegelung entriegelt, wenn die besagte Druckkammer mit Druckfluid von der Druckquelle her beaufschlagt wird.

Die genannten Druck- und/oder Strömungssteuermittel im Ablauf der genannten Druckkammer können dabei grundsätzlich verschieden ausgebildet sein. Beispielsweise kann ein Schaltventil vorgesehen sein, das in einer Schaltstellung den Ablauf blockiert bzw. dessen Ablaufquerschnitt beschränkt und in einer anderen Schaltstellung den Ablauf freigibt bzw. dessen Ablaufquerschnitt weiter öffnet. Alternativ oder zusätzlich zu einem solchen Schaltventil können die Druck- und/oder Strömungssteuermittel insbesondere aber auch eine Drossel umfassen, die Druckfluid aus der Entriegelungsdruckkammer langsam ablaufen lässt, andererseits aber bei versuchtem schnelleren Ablaufen einen entsprechenden Staudruck erzeugt, um bei Druckfluidbeaufschlagung der genannten Druckkammer darin einen ausreichend hohen Betätigungsdruck aufzubauen, der den Druckmittelzylinder in die entriegelnde Stellung treibt.

Insbesondere kann im besagten Ablauf der Entriegelungsdruckkammer eine solche Drossel mit einem Rückschlagventil bzw. Rücklaufverhinderungsventil kombiniert werden, wobei das genannte Rückschlag- bzw. Rücklaufverhinderungsventil Druckfluid über die Drossel ablaufen lässt, andererseits aber ein Befüllen der Entriegelungsdruckkammer über die Drossel bzw. den Ablauf verhindert.

Ist in der vorgenannten Weise ein Gleichlaufzylinder vorgesehen, kann der besagte Ablauf die Druckkammern auf gegenüberliegenden Seiten des Kolbens des Gleichlaufzylinders miteinander verbinden, sodass aus der Entriegelungsdruckkammer ablaufendes Druckfluid, das beim Verbringen des Druckmittelzylinders in die verriegelnde Stellung verdrängt wird, in die Druckmittelkammer auf der anderen Kolbenseite rückgespeist wird. Durch die Ausbildung des Druckmittelzylinders als Gleichlaufzylinder kann sich der Zylinder auch bei inaktivem Steuergerät in Schwimmstellung bewegen, insbesondere aus der entriegelnden Stellung in die verriegelnde Stellung zurückfahren, ohne dass dabei aus der Entriegelungsdruckkammer verdrängtes Druckfluid in einen Tank rückgespeist werden müsste.

In alternativer Ausführung der Erfindung könnte gleichwohl der genannte Auslauf der Entriegelungsdruckkammer mit einem Tank des Hydraulik-, bzw. Pneumatiksystems verbunden sein, um Druckfluid, das aus der Entriegelungsdruckkammer beim Verriegeln verdrängt wird, in den Tank zu speisen. Bei einer solchen Rückführleitung zum Tank, die den Auslauf mit dem Tank verbindet, könnte in der vorgenannten Weise ein Gleichlaufzylinder, aber auch ein Druckmittelzylinder mit unterschiedlichen Verdrängungsverhältnissen beispielsweise in Form eines einfach wirkenden Stellzylinders mit nur einseitiger Kolbenstange Verwendung finden. Gleichwohl ist es vorteilhaft, in der vorgenannten Weise einen Gleichlaufzylinder zu verwenden und den Auslauf mit den genannten Druck- und/oder Strömungssteuermitteln als Rücklauf in die gegenläufige Druckkammer auszubilden.

Die Druckbeaufschlagung des Entriegelungsaktors, insbesondere dessen Entriegelungskammer, kann von dem vorgenannten Steurgerät gesteuert werden, das als Drucksteuergerät ausgebildet sein und den von einer Druckquelle her kommenden Druck auf die genannte Entriegelungsdruckkammer geben und steuern kann. Das genannte Steuergerät kann hierbei nach Art eines Ein-/Aus-Schaltventils oder vorteilhafterweise auch nach Art eines Drucksteuer- und/oder -regelventils ausgebildet sein, um den Druck stufenweise oder stufenlos erhöhen und hierdurch die Stellbewegung des Entriegelungsaktors feiner steuern zu können.

Der Entriegelungsaktor kann hierbei über das genannte Steuergerät separat vom Klappantrieb an eine entsprechende Druckquelle angebunden sein, die beispielsweise ein Druckanschluss des Schleppers oder auch eine Druckquelle oder ein Druckanschluss am Anbaugerät sein kann. Um einen separaten, zusätzlichen Druckanschluss bzw. eine separate Druckversorgung zu vermeiden, bzw. einzusparen, kann die Druckversorgung des Entriegelungszylinders aber auch von der Druckversorgung eines anderen Funktionsaggregats bzw. Stellaktors abgezweigt werden. Insbesondere kann der Entriegelungszylinder an die Druckversorgung einer in der Transportstellung nicht benötigten Funktionsbaugruppe des Anbaugeräts angebunden sein, die üblicherweise nur in der Arbeitsstellung des Klapprahmenteils benötigt oder verwendet wird und in der Transportstellung regelmäßig deaktiviert bzw. nicht benötigt ist. Je nach Ausbildung des Anbaugeräts können dies verschiedene Funktionsbaugruppen sein, wobei vorteilhafterweise eine Tiefeneinstellvorrichtung bzw. deren Hydraulikversorgung angezapft werden kann, um den Entriegelungszylinder zu betätigen. Eine solche Tiefeneinstellvorrichtung kann beispielsweise die Höhe einer Nachlaufwalze gegenüber Bodenbearbeitungswerkzeugen verändern bzw. einstellen und hierzu einen hydraulischen Stellaktor aufweisen, mittels dessen die Höhe der Nachlaufwalze gegenüber den Bodenbearbeitungswerkzeugen und damit die Arbeitstiefe eingestellt werden kann.

Wird der Entriegelungsaktor an die Druckversorgung einer solchen Tiefeneinstellvorrichtung angebunden, kann die Entriegelungsdruckkammer des Druckmittelzylinders des Entriegelungsaktors vorteilhafterweise an den Druckversorgungskanal angeschlossen werden, über den die Bodenarbeitswerkzeuge angehoben und/oder die Nachlaufwalze abgesenkt werden kann.

Der Entriegelungsaktor kann aber grundsätzlich auch an andere hydraulische Funktionsbaugruppen des Anbaugeräts angebunden werden, wobei eine solche Funktionsbaugruppe, deren Hydraulikversorgung zum Beaufschlagen des Entriegelungsaktors verwendet wird, vorteilhafterweise nicht der Klappantrieb zum Ausklappen bzw. Einklappen des Klapprahmenteils ist, sondern eine hiervon verschiedene Funktionsbaugruppe. Bei einem Bodenbearbeitungsgerät kann dies die genannte Tiefeneinstellvorrichtung sein. Bei einem Heuwerbungsgerät kann dies beispielsweise eine Höheneinstellvorrichtung zum Verstellen der Tastfahrwerkshöhe oder eine Lenkvorrichtung zum Einlenken eines - in der Transportstellung nicht benötigten - Kreiselfahrwerks sein. Andere Funktionsaggregate können ebenfalls für die Energie- insbesondere Druckversorgung des Entriegelungsaktors verwendet werden.

Die Erfindung wird nachfolgend anhand eines bevorzugten Ausführungsbeispieles und zugehöriger Zeichnungen näher erläutert. In den Zeichnungen zeigen:

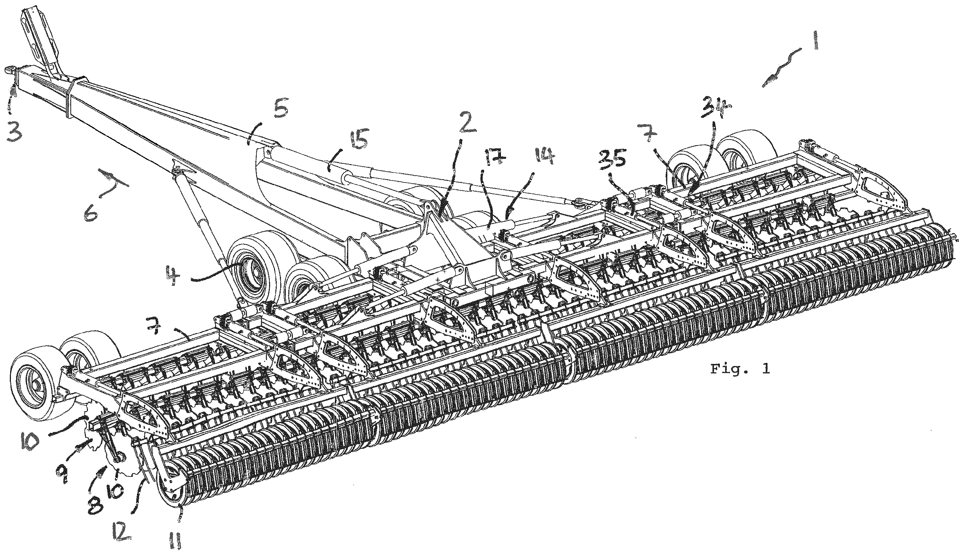

- Fig. 1:: eine perspektivische, heckseitige Ansicht eines Anbaugeräts nach einer vorteilhaften Ausführung der Erfindung, das als Bodenbearbeitungsgerät in Form einer Scheibenegge ausgebildet ist, wobei ein die Arbeitsaggregate tragender Klapprahmenteil in seiner abgesenkten Arbeitsstellung quer zur Fahrtrichtung verlaufend dargestellt ist,

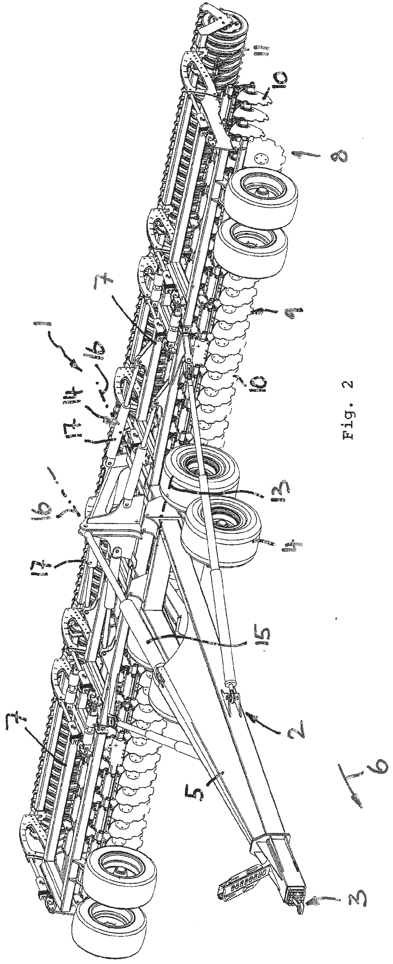

- Fig. 2:: eine perspektivische frontseitige Ansicht des landwirtschaftlichen Anbaugeräts aus Fig. 1, das den durch ein Fahrwerk am Boden abgestützten Hauptrahmen und die daran heckseitig angelenkten und in der Arbeitsstellung quer auskragenden Klapprahmenteile zeigt,

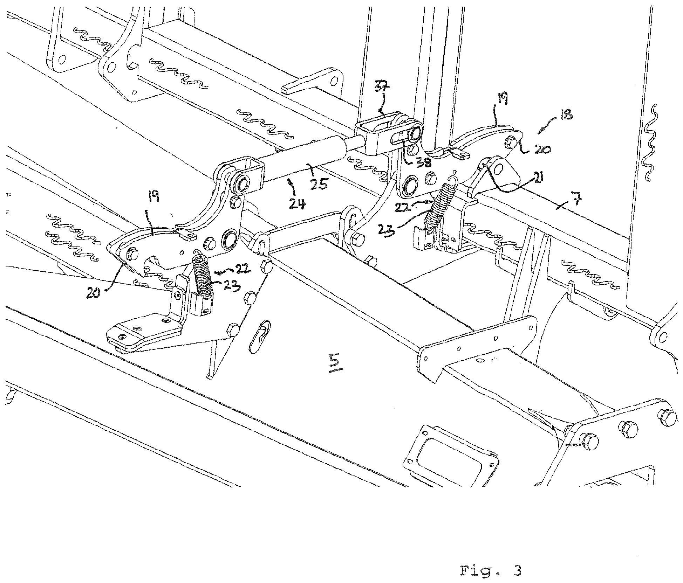

- Fig. 3:: eine perspektivische, ausschnittsweise vergrößerte Darstellung der Verriegelung zum Verriegeln der Klapprahmenteile in deren Transportstellung am Hauptrahmen, wobei einer der Klapprahmenteile in der angeklappten, verriegelten Transportstellung gezeigt und die Verriegelung für den anderen Klapprahmenteil ohne darin verriegelten Klapprahmen gezeigt ist, und

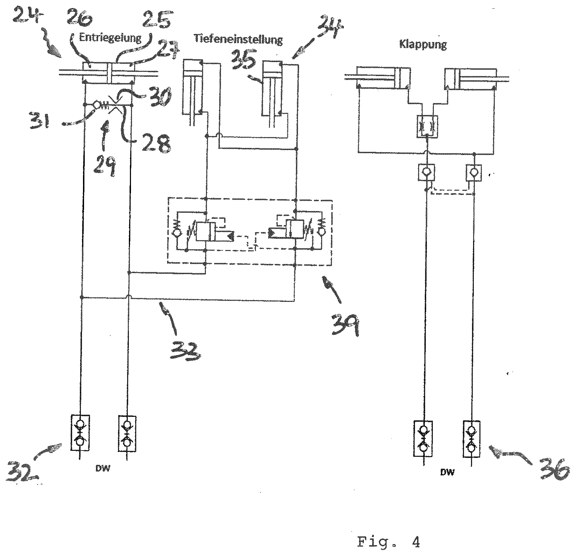

- Fig. 4:: eine Diagrammdarstellung des Klappantriebs und des Entriegelungsaktors und deren Hydraulikversorgungssysteme.

Wie die Figuren 1 und 2 zeigen, kann das landwirtschaftliche Anbaugerät 1 beispielsweise als Bodenbearbeitungsgerät ausgebildet sein, wobei jedoch auch eine Ausbildung als Grünlandgerät beispielsweise in Form einer Heuwerbungsmaschine möglich ist. Das Anbaugerät 1 umfasst dabei einen Maschinenrahmen 2, der mittels einer Anbauvorrichtung 3 beispielsweise in Form einer Deichsel oder eines Anbaubocks mit einer Dreipunktanlenkung an einem nicht gezeigten Schlepper angebaut werden kann. Das Anbaugerät 1 kann hierbei heckseitig oder frontseitig anbaubar sein.

Wie die Figuren 1 und 2 zeigen, kann der Maschinenrahmen 2 über ein Fahrwerk 4 am Boden abgestützt sein. Der genannte Maschinenrahmen 2 kann hierbei einen Hauptrahmen 5 umfassen, der sich im Wesentlichen in Fahrtrichtung 6 erstrecken kann, und ferner einen oder mehrere Klapprahmenteile 7 umfassen, die an dem vorgenannten Hauptrahmen 5 klappbar bzw. schwenkbar angelenkt bzw. aufgehängt sind. An den genannten Klapprahmenteilen 7 können Arbeitsaggregate 8 angeordnet sein, die die landwirtschaftliche Funktion des Anbaugergäts ausführen, wobei alternativ oder zusätzlich solche Arbeitsaggregate 8 auch an dem Hauptrahmen 5 vorgesehen sein können. Wie die Figuren zeigen, können die Arbeitsaggregate 8 bei Ausbildung des Anbaugeräts 1 als Bodenbearbeitungsgerät Bodenbearbeitungswerkzeuge 9 beispielsweise in Form von Scharscheiben 10 und eine Nachläuferwalze 11 umfassen, wobei zwischen den Scharscheiben 10 und der genannten Nachläuferwalze 11 auch Scharstriegel 12 angeordnet sein können. Die genannten Bodenbearbeitungswerkzeuge 9 können dabei in mehreren Reihen hintereinander angeordnet sein, die sich jeweils in Arbeitsposition quer zur Fahrtrichtung 6 erstrecken können, vgl. Fig. 1 und Fig. 2.

In der in den Figuren 1 und 2 gezeigten Arbeitsposition der Klapprahmenteile 7 erstrecken sich die genanten Klapprahmenteile 7 quer zur Fahrtrichtung 6, sodass auch die Bodenwerkzeugreihen sich entsprechend quer zur Fahrtrichtung erstrecken können.

Um die zulässige Straßentransportbreite einhalten zu können und/oder eine kompakte Park- bzw. Lagerkonfiguration einnehmen zu können, können die genannten seitlich auskragenden Klapprahmenteile 7 aus der in den Figuren 1 und 2 gezeigten, abgesenkten Arbeitsstellung in eine Tranportstellung verbracht werden, in denen sich die seitlichen Klapprahmenteile 7 im Wesentlichen parallel entlang des Hauptrahmens 5 erstrecken. Hierzu können die genannten Klapprahmenteile 7 zunächst um eine liegende, sich quer zur Fahrtrichtung 6 erstreckende erste Klappachse 13 aufgerichtet werden, sodass sich die in der Arbeitsposition grob gesprochen horizontal ausgerichteten Klapprahmenteile 7 aufrecht erstrecken, aber immer noch quer zur Fahrtrichtung 6. Zum Aufrichten der Klapprahmenteile 7 um die erste Klappachse 13 kann der hierfür vorgesehene Klappantrieb 14 beispielsweise einen Klappzylinder 15 umfassen, vgl. Fig. 2.

Nach Aufrichten der Klapprahmenteile 7 in der genannten Weise können die zunächst immer noch seitlich überstehenden Klapprahmenteile 7 jeweils um eine zweite Klappachse 16 verschwenkt werden, die sich in der aufgerichteten Stellung der Klapprahmenteile 7 im Wesentlichen aufrecht erstreckt und in der in Fig. 1 und 2 gezeigten, abgesenkten Arbeitsposition liegend näherungsweise fahrtrichtungsparallel erstrecken kann.

Insbesondere können die genannten Klapprahmenteile 7 um die besagten zweiten Klappachsen 16 nach vorne verengt werden, sodass sich die Klapprahmenteile 7 näherungsweise parallel zum Hauptrahmen 5 erstrecken bzw. an diesen angeklappt sind.

Für diesen zweiten Teil des Klappvorgangs kann der Klappantrieb 14 weitere Klappzylinder 17 aufweisen, die die seitlichen Klapprahmenteile 7 um die genannten Klappachsen 16 schwenken können. Die Klappzylinder 17 können hierbei einerseits an den Klapprahmenteilen 7 und andererseits an einem zentralen Rahmenteil, das in der vorgenannten Weise aufrichtbar ist, angelenkt sein, vgl. Fig. 1 und 2.

Um die Klapprahmenteile 7 in der besagten Transportstellung mechanisch verriegeln zu können, ist eine Verriegelungsvorrichtung bzw. Verriegelung 18 vorgesehen, mittels derer die Klapprahmenteile in der Transportstellung formschlüssig blockierbar bzw. gehalten werden können.

Wie Fig. 3 zeigt, kann die besagte Verriegelung 18 einen bewegbaren Riegelteil 19 aufweisen, der zwischen einer verriegelnden Stellung und einer entriegelnden Stellung bewegbar ist und den Klapprahmenteil 7 in der Transportstellung formschlüssig hintergreifen und/oder in anderer Weise blockieren kann. Der Riegelteil 19 kann insbesondere quer zu einer Bewegungsbahn eines Klapprahmenteilabschnitts beweglich sein, der von dem Riegelteil 19 gegriffen werden soll, wobei der Riegelteil 19 einen Keilflächen- bzw. Schrägflächenabschnitt 20 aufweisen kann, auf den der besagte Klapprahmenabschnitt, der gegriffen werden soll, auflaufen kann, um den Riegelteil 19 selbsttätig aufzudrücken.

Alternativ oder zusätzlich kann ein solcher Schrägflächenabschnitt auch an dem Klapprahmenteil vorgesehen sein, der beim Verschwenken des Klapprahmenteils 7 in die Transportstellung auf den Riegelteil 19 aufläuft und diesen über die Keil- bzw. Schrägflächenwirkung aufdrückt.

Wie Fig. 3 verdeutlicht, kann der Riegelteil der Verriegelung 18 eine bewegliche Sperrklinke umfassen, wobei an dem Klapprahmenteil 7 eine Raste 21 beispielsweise in Form eines Querbolzens vorgesehen sein kann, wobei die genannte Raste 21 mit der Sperrklinke des Riegelteils 19 in formschlüssigen Riegeleingriff bringbar ist, welcher Riegeleingriff ein Verschwenken des Klapprahmenteils 7 aus der Transportstellung weg verhindert.

Soweit bei dem in den Zeichnungen gezeigten Anbaugerät zwei Klapprahmenteile 7 vorgesehen sind, kann die Verriegelung 18 zwei solche Riegelteile 19 umfassen, um jedes der beiden verschwenkbaren Klapprahmenteile in der Transportstellung verriegeln zu können.

Wie Fig. 3 zeigt, kann die Verriegelung 18 durch eine Vorspanneinrichtung 22 in ihre verriegelnde Stellung vorgespannt sein, sodass beim Anklappen der Klapprahmenteile 7 die Verriegelung 18 selbsttätig in die verriegelnde Stellung schnappt. Die genannte Vorspanneinrichtung 22 kann beispielsweise eine Federeinrichtung 23 umfassen, die den besagten Riegelteil 19 beaufschlagt und diesen in seine verriegelnde Stellung treibt.

Der Riegelteil 19 kann beispielsweise als Schwenkhebel ausgebildet und schwenkbar gelagert sein. In diesem Fall kann die Federeinrichtung 23 dazu vorgesehen sein, den besagten Riegelteil 19 in die verriegelnde Stellung zu verschwenken.

Um die Verriegelung 18 entgegen der Vorspanneinrichtung 22 öffnen bzw. entriegeln zu können, ist ein Fremdenergie betätigter Entriegelungsaktor 24 vorgesehen, der den Riegelteil 19 in dessen entriegelte Stellung bewegen kann. Der besagte Entriegelungsaktor 24 kann einen Druckmittelzylinder 25 umfassen, der an dem Riegelteil 19 angelenkt ist, um diesen zu bewegen.

Sind gemäß der gezeichneten Ausführung zwei Riegelteile 19 vorgesehen, kann der Druckmittelzylinder 25 an beiden Riegelteilen 19 angelenkt sein, um diese parrallel zu öffnen, vgl. Fig. 3. Beispielsweise können die beiden Riegelteile 19 jeweils als Schwenkhebel ausgebildet sein und/oder eine gemeinsame Bewegungsebene aufweisen, in der auch der genannte Druckmittelzylinder 25 angeordnet sein und/oder wirken kann.

Wie Fig. 4 verdeutlicht, kann der genannte Druckmittelzylinder 25 dabei vorteilhafterweise als Gleichlauf- bzw. Gleichgangzylinder ausgebildet sein, dessen Volumenverdrängungen bei gegenläufigen Bewegungen einander zumindest näherungsweise entsprechen, das heißt der Kolben des Gleichlaufzylinders verdrängt bei einer nach links gehenden Bewegung näherungsweise dieselbe Druckfluidmenge als bei einer nach rechts gehenden Bewegung. Beispielsweise kann ein solcher Gleichlaufzylinder eine durchgängige Kolbenstange aufweisen, die sich auf gegenüberliegenden Seiten des Kolbens erstreckt und beide, auf gegenüberliegenden Seiten des Kolbens angeordneten Druckkammern im Wesentlichen vollständig durchsetzt. Insbesondere können die auf gegenüberliegenden Kolbenseiten angeordneten Druckkammern 26 und 27 gleiche Querschnittsflächen besitzen.

Wie Fig. 3 zeigt, kann der Druckmittelzylinder 25 dabei einerseits mit seiner Kolbenstange an einem ersten Riegelteil 19 und mit seinem Zylinder an dem anderen Riegelteil 19 angelenkt sein. Bei Vorhandensein nur eines Riegelteils oder bei Verwendung zweier Entriegelungsaktoren kann auch vorgesehen sein, dass der Druckmittelzylinder mit seinem Zylinder und seiner Kolbenstange einerseits an einem Riegelteil und andererseits an einem Rahmenteil angelenkt ist.

Wie Fig. 3 verdeutlicht, kann der Druckmittelzylinder 25 bei Verkürzung bzw. Einfahren seiner Kolbenstange die Verriegelung entriegeln und bei Ausfahren der Kolbenstange bzw. Verlängern die Verriegelung verriegeln, wobei die Verstellung der Riegelteile 19 in die Verriegelungsstellung nicht aktiv durch den Druckmittelzyinder 25 erfolgen muss, sondern auch durch die Vorspanneinrichtung 22 erzielt werden kann.

Wie Fig. 4 zeigt, umfasst der Druckmittelzyinder 25 einen Ablauf 28, über den Druckfluid aus der Druckkammer 26, die die Entriegelung des Druckmittelzylinders 25 bewirkt, ablaufen kann.Bei der in den Figuren gezeigten Ausbildung des Druckmittelzylinders als Gleichlaufzylinder kann der genannte Ablauf 28 die beiden Druckkammern 26 und 27 miteinander verbinden bzw. vorsehen, dass Druckfluid aus der Entriegelungskammer 26 in die gegenüberliegende Druckkammer 27 strömen kann.

Vorteilhafterweise umfasst der besagte Ablauf 28 dabei Druck- und/oder Strömungssteuermittel 29, die ein langsames Ablaufen von Druckfluid aus der Drucckammer 26 erlauben, andererseits gleichzeitig aber bei Beaufschlagung der Drucckammer 26 mit Druckfluid aus einer Druckquelle einen Druckaufbau in der besagten Druckkammer 26 ermöglichen.

Insbesondere können die genannten Druck- und/oder Strömungssteuermittel 29 eine Drossel 30 aufweisen, die den Abfluss über den Ablauf 28 beschränkt und den besagten Druckaufbau ermöglicht. Ferner kann in dem genannten Ablauf 28 ein Rückschlag- und/oder Rücklauf-Verhinderungsventil 31 vorgesehen sein, um Druckverluste bei Beaufschlagung der gegenüberliegenden Druckkammer 27 zu verhindern.

Wie Fig. 4 zeigt, kann der Druckmittelzylinder 25 des Entriegelungsaktors 24 über ein Steuergerät 32 hydraulisch angesteuert bzw. mit Druckfluid beaufschlagt oder wahlweise in Schwimmstellung geschaltet werden. Das genannte Steuergerät 32 kann beispielsweise ein Schaltventil und/oder Drucksteuer- oder -regelventil sein bzw. umfassen, um einen Druck, der von Druckanschlüssen beispielsweise des Schleppers bereitgestellt wird, auf den Druckmittelzylinder 25 zu geben bzw. diesen hiervon abzusperren.

Vorteilhafterweise kann der Druckmittelzylinder 25 des Entriegelungsaktors 24 dabei an die Druckversorgung bzw. den Druckkreis 33 eines Funktionsbausteins des Anbaugeräts 1 angebunden sein, der an sich für eine andere Funktion des Arbeitsaggregats, das heißt nicht für die Verriegelung vorgesehen ist und in der Transportstellung regelmäßig nicht benötigt wird. Dies kann beispielsweise eine Tiefeneinstellvorrichtung 34 sein, mittels derer die Arbeitstiefe der Arbeitsaggregate 8 des Anbaugeräts eingestellt werden kann. Die genannte Tiefeneinstellvorrichtung 34 kann dabei beispielsweise Tiefeneinstell-Druckmittelzylinder 35 umfassen, mittels derer beispielsweise die Höhenstellung der Nachläuferwalze 11 relativ zu den Scharscheiben 10 verstellt werden kann, um hierdurch die Arbeitstiefeneinstellung vornehmen zu können. In der Transportstellung der Klapprahmenteile 7 wird die Tiefeneinstellung regelmäßig nicht benötigt, sodass eine Betätigung der Tiefeneinstellvorrichtung 34 in der Transportstellung ohne Belang ist und der Druck bzw. die Druckversorgung der Tiefeneinstellvorrichtung 34 zur Betätigung des Entriegelungsaktors 24 genutzt werden kann.

Wie Fig. 4 zeigt, kann also als Steuergerät 32 zum Betätigen des Entriegelungsaktors 24 das Steuergerät verwendet werden, welches an sich für die Tiefeneinstellung vorgesehen ist.

Wie Fig. 4 weiterhin verdeutlicht, wird der Klappantrieb 14 und dessen Klappzylinder 15 und 17 vorteilhafterweise über separate Druckversorgungsanschlüsse gespeist bzw. beaufschlagt und durch ein separates Steuergerät 36 gesteuert und betätigt. Das genannte Steuergerät 36 für die Betätigung des Klappantriebs 14 kann ebenfalls eine hydraulische Ausbildung haben, insbesondere ein Schaltventil und/oder ein Druckregel- bzw. -steuerventil umfassen, um die Druckbeaufschlagung der Klappzylinder steuern zu können.

Die Funktionsweise des erläuterten Ausführungsbeispiels ist dabei folgendermaßen: Beim Anklappen der Klapprahmenteile 7 in die Transportstellung ist die Verriegelung 18 in ihrer verriegelungsbereiten Stellung. Der Druckmittelzylinder 25 des Entriegelungsaktors 24 ist dabei in seiner Neutral- und/oder Verriegelungsstellung. Über den Ablauf 28 und Nichtbetätigung des Steuergeräts 32 ist der besagte Druckmittelzylinder 25 in Schwimmstellung, sodass dieser Bewegung der Riegelteile 19 erlaubt und nur unter Verdrängung des Druckfluids beweglich ist. Die genannten Riegelteile 19 sind dabei von der Vorspanneinrichtung 22 in ihre verriegelnde Stellung getrieben, wie dies Fig. 3 zeigt. Fährt ein Klapprahmenteil 7 in die Transportstellung, wird das jeweilige Riegelteil 19 entgegen der Vorspanneinrichtung 22 aufgedrückt und schnappt sodann wieder zu, um den Klapprahmenteil 7 zu verriegeln. Dieses Aufdrücken und wieder Zuschnappen eines Riegelteils 19 ist dabei an sich ohne Bewegung des Druckmittelzylinders 25 des Entriegelungsaktors 24 möglich, da die Anlenkung des Druckmittelzylinders 25 einen begrenzten Freilauf 37 umfasst, der beispielsweise durch ein Langloch 38 realisiert sein kann, über das die Aufhängung bzw. Anlenkung erfolgt, vgl. Fig. 3.

Soll der Klapprahmenteil 7 wieder ausgeklappt werden, muss zunächst die Verriegelung 18 entriegelt werden. Hierzu wird das Steuergerät 32 betätigt, um Druck auf die Entriegelungskammer 26 zu geben, sodass sich der Kolben des Druckmittelzylinders 25 bei Betrachtung der Fig. 4 nach rechts verschiebt und bei Betrachtung der Fig. 3 die Kolbenstange einzieht. Die dabei gleichzeitig erfolgende Beaufschlagung der Tiefeneinstellvorrichtung 34 bleibt ohne Wirkung, da in der Transportstellung nicht benötigt.

Wie Fig. 4 zeigt, würde die Druckbeaufschlagung der Entriegelungsdruckkammer 26 an sich bewirken, dass das Druckfluid über den Ablauf 28 ablaufen würde und wirkungslos bliebe. Aufgrund der Drossel 30 im Ablauf 28 baut sich bei ausreichend großer Druckfluid-Beaufschlagung jedoch ein Entriegelungsdruck in der Entriegelungsdruckkammer 26 auf, der den Kolben in entsprechender Weise verschiebt. Die sich einstellende Bewegung des Druckmittelzylinders 25 führt zu einer entsprechenden Riegelteilbewegung, die die Verriegelung 18 entriegelt. Ist die Verriegelung 18 entriegelt, kann der Klappantrieb 14 den Klapprahmenteil 11 ausschwenken. Hierzu wird das Steuergerät 36 betätigt, um die Klappzylinder des Klappantriebs 14 mit Druck zu beaufschlagen.

Sobald der Klapprahmenteil 7 aus der Verriegelung gefahren ist, kann der Entriegelungsaktor 27 wieder deaktiviert werden, indem das Steuergerät 32 die Druckversorgung wieder herunterfährt. Bleibt der Druckfluidnachschub von der Druckquelle her aus, da das Steuergerät 32 dies unterbindet bzw. die Druckversorgung soweit heruntergefahren hat, strömt das Druckfluid aus der Entriegelungskammer 26 über den Ablauf 28 und die dort vorgesehene Drossel 30 langsam ab, was unter Wirkung der Vorspanneinrichtung 22 zustande kommt, die den Riegelteil 19 in die verriegelnde Stellung zu treiben versucht und dabei den Druckmittelzylinder 25 ein Stück weit mitnimmt.

Ist der Klapprahmenteil 7 vollständig ist seine Arbeitsstellung abgesenkt, kann die Tiefeneinstellvorrichtung 34 wieder beaufschlagt werden. Dies kann über den rechten Arm des Steuergeräts 32 und der davon abgehenden Druckkreisleitung erfolgen, wobei das vorgenannte Rückschlag- bzw. Rückflussverhinderungsventil 31 verhindert, dass der Druck über den Ablauf 28 abgebaut wird.

Wie Fig. 4 zeigt, kann die Tiefeneinstellvorrichtung 34 dabei über eine Ventilanordnung 39 in an sich bekannter Weise hydraulisch gesteuert werden.

## Patentansprüche

1. Landwirtschaftliches Anbaugerät mit einem zumindest ein Arbeitsaggregat (8) tragenden Maschinenrahmen (2), der zumindest einen Klapprahmenteil (7) aufweist, der mittels eines Klappantriebs (14) aus einer Arbeitsstellung in eine Transportstellung klappbar ist, wobei eine Verriegelung (18) zum Verriegeln des Klapprahmenteils (7) in der Transportstellung vorgesehen ist, wobei ein Entriegelungsaktor (24) zum fremdenergiebetätigten Entriegeln der Verriegelung (18) einen Druckmittelzylinder zum Verbringen eines Riegelteils (19) der Verriegelung (18) in dessen entriegelte Stellung aufweist, wobei der Entriegelungsaktor (24) und der Klappantrieb (14) mittels separater Steuergeräte (32, 36) jeweils manuell betätigbar und/oder steuerbar sind, **dadurch gekennzeichnet, dass** der Druckmittelzylinder (25) des Entriegelungsaktors (24) als Gleichlaufzylinder ausgebildet ist, der in entgegengesetzten Laufrichtungen zumindest näherungsweise dieselben Volumenverdrängungen besitzt, wobei der Gleichlaufzylinder eine sich auf gegenüberliegenden Kolbenseiten erstreckende Kolbenstange besitzt, die auf gegenüberliegenden Kolbenseiten vorgesehene Druckkammern (26, 27) vollständig durchsetzt, sodass die beiden Druckkammern (26, 27) jeweils als Ringkammer ausgebildet sind.

2. Landwirtschaftliches Anbaugerät nach dem vorhergehenden Anspruch, wobei die Verriegelung (18) von einer Vorspanneinrichtung (22) in die verriegelnde Stellung vorgespannt ist und der Entriegelungsaktor (24) zum Entriegeln der Verriegelung (28) entgegen der Vorspanneinrichtung (22) ausgebildet ist.

3. Landwirtschaftliches Anbaugerät nach einem der vorhergehenden Ansprüche, wobei eine Entriegelungsdruckkammer (26) des Druckmittelzylinders (25), die eine Zylinderbewegung in Entriegelungsrichtung bewirkt, einen Ablauf (28) mit Druck- und/oder Strömungssteuermitteln (29) aufweist, die dazu konfiguriert sind, in einer Schwimmstellung des Druckmittelzylinders (25) Druckfluid aus der Entriegelungsdruckkammer (26) ablaufen zu lassen und bei Druckbeaufschlagung der Entriegelungsdruckkammer (26) mit Druckfluid von einer Druckquelle her einen Druckaufbau in der Entriegelungsdruckkammer (26) zum Bewegen des Druckmittelzylinders (25) in die entriegelnde Stellung bereitzustellen.

4. Landwirtschaftliches Anbaugerät nach dem vorhergehenden Anspruch, wobei die Druck- und/oder Strömungssteuermittel (29) eine Drossel (30) zum Drosseln des ablaufenden Druckfluids aus dem Ablauf (28) umfassen.

5. Landwirtschaftliches Anbaugerät nach einem der beiden vorhergehenden Ansprüche, wobei die Druck- und/oder Strömungssteuermittel (29) ein Rückschlag- und/oder Rückflussverhinderungsventil (31) zum Verhindern eines Druckfluidflusses durch den Ablauf (28) in die Entriegelungsdruckkammer (26) umfassen.

6. Landwirtschaftliches Anbaugerät nach einem der vorhergehenden Ansprüche, wobei die separaten Steuergeräte (32, 36) zum Steuern des Entriegelungsaktors (24) und zum Steuern des Klappantriebs (14) jeweils Hydraulikdruck-Steuermittel, vorzugsweise in Form von Schalt- und/oder Drucksteuerventilen umfassen.

7. Landwirtschaftliches Anbaugerät nach einem der vorhergehenden Ansprüche, wobei die Steuergeräte (32, 36) zum Steuern des Entriegelungsaktors (24) und des Klappantriebs (14) separaten Druckanschlüssen zugeordnet sind und zum Steuern von Druck aus separaten Druckanschlüssen ausgebildet sind.

8. Landwirtschaftliches Anbaugerät nach einem der vorhergehenden Ansprüche, wobei die Druckversorgung des Entriegelungsaktors (24) von der Druckversorgung und/oder dem Druckkreis eines Funktionsbausteins des Anbaugeräts abgezweigt ist, der in der Transportstellung des Klapprahmenteils (7) inaktiv und in der Arbeitsstellung aktiv ist.

9. Landwirtschaftliches Anbaugerät nach dem vorhergehenden Anspruch, wobei der Funktionsbaustein, von dessen Druckversorgungskreis her der Entriegelungsaktor (24) gespeist ist, eine Tiefeneinstellvorrichtung (34) zum Einstellen der Arbeitstiefe des zumindest einen Arbeitsaggregats (8) umfasst.

10. Landwirtschaftliches Anbaugerät nach einem der vorhergehenden Ansprüche, wobei der zumindest eine Klapprahmenteil (7) aus einer liegenden, sich quer zur Fahrtrichtung erstreckenden Arbeitsposition in eine näherungsweise fahrtrichtungsparallele Transportstellung verbringbar ist.

## Claims

1. Agricultural implement with a machine frame (2) carrying at least one working unit (8), which frame comprises at least one folding frame part (7) that can be folded from an operating position to a transport position by means of a fold drive (14), wherein a lock (18) for locking the folding frame part (7) in the transport position is provided, wherein an unlocking actuator (24) for unlocking the lock (18) by means of external energy comprises a pressure medium cylinder for displacing a locking part (19) of the lock (18) into its unlocked position, wherein the unlocking actuator (24) and the fold drive (14) are manually actuatable and/or controllable by means of separate controllers (32, 36), **characterized in that** the pressure medium cylinder (25) of the unlocking actuator (24) is configured as a synchronous cylinder that has at least approximately the same displaced volumes in opposite directions, wherein the synchronous cylinder has a piston rod extending on opposite piston sides, which penetrates completely through pressure chambers (26, 27) provided at opposite piston sides, so that the two pressure chambers (26, 27) are respectively formed as an annular chamber.

2. Agricultural implement according to the preceding claim, wherein the lock (18) is pre-tensioned into the locked position by a pre-tensioning device (22), and the unlocking actuator (24) is configured for unlocking the lock (28) against the pre-tensioning device (22).

3. Agricultural implement according to any one of the preceding claims, wherein an unlocking pressure chamber (26) of the pressure medium cylinder (25) that causes a cylinder movement in the unlocking direction comprises a drain (28) with pressure and/or flow control means (29), which are configured to have a pressure fluid drained from the unlocking chamber (26) in a swim position of the pressure medium cylinder (25) and, when pressurizing the unlocking pressure chamber (26) with pressure medium from a pressure source, to provide a pressure built-up in the unlocking pressure chamber (26) for moving the pressure means cylinder (25) into the unlocked position.

4. Agricultural implement according to the preceding claim, wherein the pressure and/or flow control means (29) comprises a restrictor (30) for restricting the draining pressure fluid from the drain (28).

5. Agricultural implement according to one of the two preceding claims, wherein the pressure and/or flow control means (29) comprise a check valve and/or backflow prevention valve (31) for preventing a pressurized fluid flow through the drain (28) into the unlocking pressure chamber (26).

6. Agricultural implement according to any one of the preceding claims, wherein the separate controllers (32, 36) respectively comprise hydraulic pressure control means, preferably in the form of shift control valves and/or pressure control valves, for controlling the unlocking actuator (24) and for controlling the fold drive (14).

7. Agricultural implement according to any one of the preceding claims, wherein the controllers (32, 36) are associated with separate pressure ports, for controlling the unlocking actuator (24) and the fold drive (14), and are configured of separate pressure ports for controlling pressure.

8. Agricultural implement according to any one of the preceding claims, wherein the pressure supply of the unlocking actuator (24) is branched-off from the pressure supply and/or the pressure circuit of a functional component of the implement, which component is inactive in the transport position of the folding frame part (7), and is active in the operating position.

9. Agricultural implement according to the preceding claim, wherein the functional component, from the pressure supply circuit of which the unlocking actuator (24) is supplied, comprises a depth adjustment device (34) for adjusting the working depth of the at least one working unit (8).

10. Agricultural implement according to any one of the preceding claims, wherein the at least one folding frame part (7) can be brought from a lying working position, which extends transverse to the direction of travel, to a transport position that is approximately parallel to the direction of travel.

## Revendications

1. Appareil rapporté agricole avec un bâti de machine (2) supportant au moins un groupe de travail (8), qui présente au moins une partie de bâti rabattable (7), qui peut être rabattue au moyen d'un entraînement de rabattement (14) depuis une position de travail dans une position de transport, dans lequel un verrouillage (18) est prévu pour verrouiller la partie de châssis rabattable (7) dans la position de transport, dans lequel un actionneur de déverrouillage (24) servant au déverrouillage actionné par une énergie extérieure du verrouillage (18) présente un vérin à agent sous pression servant à amener une partie de verrou (19) du verrouillage (18) dans sa position déverrouillée, dans lequel l'actionneur de déverrouillage (24) et l'entraînement de rabattement (14) peuvent être actionnés et/ou commandés respectivement manuellement au moyen d'appareils de commande (32, 36) séparés, **caractérisé en ce que** le vérin à agent sous pression (25) de l'actionneur de déverrouillage (24) est réalisé en tant que vérin synchrone, qui possède dans des directions de déplacement opposées au moins approximativement les mêmes refoulements volumétriques, dans lequel le vérin synchrone possède une tige de piston s'étendant sur des côtés de piston se faisant face, qui traverse en totalité des chambres de pression (26, 27) prévues sur des côtés de piston se faisant face de sorte que les deux chambres de pression (26, 27) sont réalisées respectivement en tant que chambres annulaires.

2. Appareil rapporté agricole selon la revendication précédente, dans lequel le verrouillage (18) est précontraint par un système de précontrainte (22) dans la position de verrouillage, et l'actionneur de déverrouillage (24) est réalisé pour déverrouiller le verrouillage (28) à l'encontre du système de précontrainte (22).

3. Appareil rapporté agricole selon l'une quelconque des revendications précédentes, dans lequel une chambre de pression de déverrouillage (26) du vérin à agent sous pression (25), qui entraîne un déplacement de vérin dans la direction de déverrouillage, présente une sortie (28) avec des moyens de commande de pression et/ou d'écoulement (29), qui sont configurés pour faire sortir dans une position flottante du vérin à agent sous pression (25) du fluide sous pression hors de la chambre de pression de déverrouillage (26) et pour, lorsque la chambre de pression de déverrouillage (26) est soumise à l'action d'un fluide sous pression provenant d'une source de pression, élever la pression dans la chambre de pression de déverrouillage (26) pour déplacer le vérin à agent sous pression (25) dans la position de déverrouillage.

4. Appareil rapporté agricole selon la revendication précédente, dans lequel les moyens de commande de pression et/ou d'écoulement (26) comprennent un étranglement (30) servant à étrangler le fluide sous pression sortant hors de la sortie (28).

5. Appareil rapporté agricole selon l'une quelconque des deux revendications précédentes, dans lequel les moyens de commande de pression et/ou d'écoulement (29) comprennent une soupape anti-retour et/ou empêchant tout reflux (31) servant à empêcher un flux de fluide sous pression à travers la sortie (28) dans la chambre de pression de déverrouillage (26).

6. Appareil rapporté agricole selon l'une quelconque des revendications précédentes, dans lequel les appareils de commande (32, 36) séparés comprennent pour commander l'actionneur de déverrouillage (24) et pour commander l'entraînement de rabattement (14) respectivement des moyens de commande de pression hydraulique, de préférence sous la forme de soupapes de commutation et/ou de commande de pression.

7. Appareil rapporté agricole selon l'une quelconque des revendications précédentes, dans lequel les appareils de commande (32, 36) servant à commander l'actionneur de déverrouillage (24) et l'entraînement de rabattement (14) sont associés à des raccords de pression séparés et sont réalisés pour commander la pression provenant de raccords de pression séparés.

8. Appareil rapporté agricole selon l'une quelconque des revendications précédentes, dans lequel l'alimentation en pression de l'actionneur de déverrouillage (24) forme un embranchement avec l'alimentation en pression et/ou le circuit de pression d'un module fonctionnel de l'appareil rapporté, qui est inactif dans la position de transport de la partie de bâti rabattable (7) et est actif dans la position de travail.

9. Appareil rapporté agricole selon la revendication précédente, dans lequel le module fonctionnel, depuis le circuit d'alimentation en pression duquel l'actionneur de déverrouillage (24) est alimenté, comprend un dispositif de réglage de précision (34) servant à régler la précision de travail de l'au moins un groupe de travail (8).

10. Appareil rapporté agricole selon l'une quelconque des revendications précédentes, dans lequel l'au moins une partie de bâti rabattable (7) peut être amenée depuis une position de travail horizontale, s'étendant de manière transversale par rapport à la direction de déplacement dans une position de transport approximativement parallèle à la direction de déplacement.
